# EUROPÄISCHE PATENTANMELDUNG

(11) **EP 2 072 832 A2**
(43) Veröffentlichungstag der Anmeldung: **24.06.2009**
(21) Anmeldenummer: 08018530.9
(22) Anmeldetag: 23.10.2008
(51) Int. Cl.: F04D 25/06

(54) **Miniaturlüfter**

(30) Priorität: 17.12.2007 DE 202007018178 U
(71) Anmelder: Ebm-Papst St. Georgen GmbH & CO. KG, 78112 St. Georgen (DE)
(72) Erfinder: Winkler, Wolfgang Amo, 78112 St. Georgen (DE)
(74) Vertreter: Raible, Tobias

(57) **Zusammenfassung**

Ein Miniaturlüfter hat einen elektronisch kommutierten Antriebsmotor (18), welcher einen mit einer Statorwicklungsanordnung versehenen Innenstator (68) und einen mit einer Welle (62) verbundenen Außenrotor (27) aufweist. Am Außenrotor ist eine Dauermagnetanordnung (66) vorgesehen, die mit dem Innenstator (68) in Wechselwirkung steht. Dort ist auch ein Lüfterrad mit Lüfterflügeln angeordnet. Der Lüfter hat einen Flansch (40'), welcher ein Lagerrohr (60) trägt, in welchem die Welle (62) des Außenrotors (27) drehbar gelagert ist. Der Flansch (40') hat einen Hohlraum (84), der zur Aufnahme einer mit Elektronikbauteilen versehenen ersten Leiterplatte (86) dient. Im Grenzbereich zwischen Flansch (40') und Motor (18) ist eine zweite Leiterplatte (96) vorgesehen, die mindestens einen galvanomagnetischen Sensor (100) trägt. Dieser dient dazu, das von der Dauermagnetanordnung (66) auf eine zugeordnete Stelle des Stators (68) einwirkende Magnetfeld zu erfassen. Die axiale Erstreckung der Lüfterflügel (26) ist so bemessen, dass sich mindestens ein Teil der Lüfterflügel vom Lüfterrad (28) bis zum Außenbereich des Flanschs (40') erstreckt, um den Luftvolumenstrom (V/t) und den Luftdruckaufbau (Δp) des Lüfters (20) zu verbessern.

## Beschreibung

Die Erfindung betrifft einen Miniaturlüfter, und insbesondere einen Miniaturlüfter mit verbesserten elektronischen Fähigkeiten, z. B. Drehzahlregelung oder Drehrichtungsumkehr.

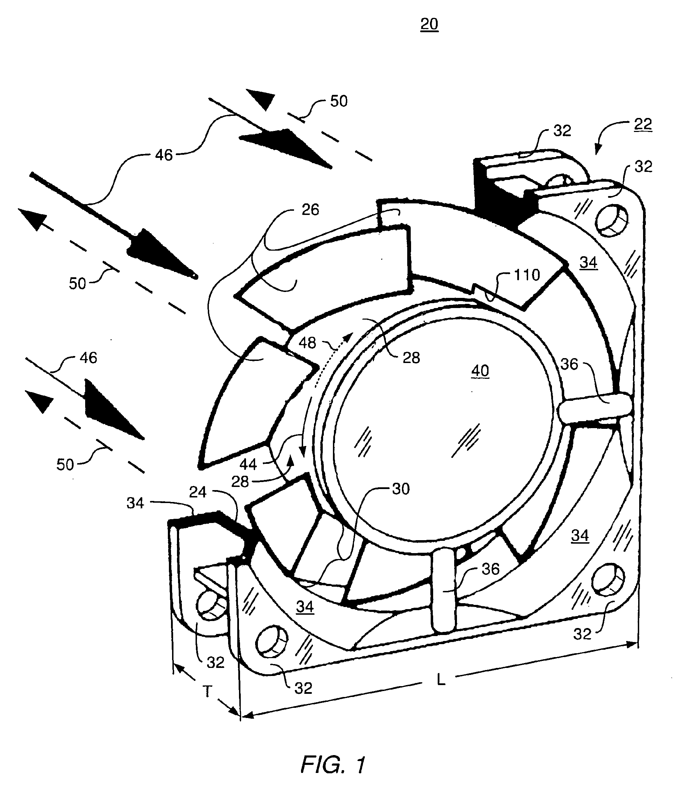

Solche Miniaturlüfter haben gewöhnlich ein quadratisches Lüftergehäuse, wie es in Fig. 1 teilweise geschnitten dargestellt ist, und das Maß L (Fig. 1) kann z. B. 20, 25, 30, 40, 50 oder 60 mm betragen, so dass also ein solches Lüftergehäuse Größen von etwa 20 x 20 mm bis etwa 60 x 60 mm hat, wobei die Gehäusetiefe T bei bekannten Miniaturlüftern meist zwischen 8 mm und 25 mm liegt. Die Größen 20 x 20 mm und 25 x 25 mm werden gewöhnlich als Mikrolüfter oder Kleinstlüfter bezeichnet, die Größen 30 x 30 bis 60 x 60 mm als Kleinlüfter, wobei die Terminologie je nach Firma und Land verschieden ist.

Solche Miniaturlüfter haben zahlreiche Anwendungsgebiete erobert, z. B. die Kühlung von Leiterplatten oder die Kühlung von Bauteilen, bei denen eine große Verlustleistung auftritt.

Es ist eine Aufgabe der Erfindung, einen neuen Miniaturlüfter bereit zu stellen.

Nach der Erfindung wird diese Aufgabe gelöst durch den Gegenstand des Patentanspruchs 1. Man erhält so einen Miniaturlüfter mit vergrößertem Bauteileraum, und es ist möglich, in diesem vergrößertem Bauteileraum eine komplexe Elektronik unterzubringen, da es möglich ist, auch in einem Miniaturlüfter auf diese Weise zwei oder mehr Leiterplatten unterzubringen, wobei sich das Interface der Leiterplatten zum Motor beschränken kann auf den galvanomagnetischen Sensor, der die augenblickliche Lage der Dauermagnetanordnung erfasst, und auf die elektrischen Verbindungen von wenigstens einer Leiterplatte zur Statorwicklung, was die Montage wesentlich vereinfacht, da z. B. bei einem Motor mit nur einem Wicklungsstrang lediglich zwei elektrische Verbindungsleitungen von diesem Wicklungsstrang zu einer Leiterplatte notwendig sind.

Es ist möglich, nach dem gleichen Prinzip auch mehr als zwei Leiterplatten in dem (oder im Bereich des) Lüfterflansch(s) unterzubringen. Dadurch vergrößert sich die Tiefe T (Fig. 1) des betreffenden Lüfters, und das ermöglich eine größere axiale Erstreckung der Lüfterflügel, auch als "Flügeltiefe" bezeichnet, und dadurch einen höheren Luft-Volumenstrom (V/t) und einen höheren Luftdruckaufbau (Δp), so dass man insgesamt einen Miniaturlüfter mit verbesserten Eigenschaften erhält.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen. Es zeigt:
- Fig. 1: eine stark vergrößerte Schemadarstellung eines Miniatur-Axiallüfters 20; Fig. 1 dient zur Erläuterung von Miniaturlüftern und von deren Problemen,
- Fig. 2: einen stark vergrößerten Axialschnitt durch einen Miniatur-Axiallüfter, und
- Fig. 3: die Schemadarstellung einer Schaltungsanordnung zum Betrieb des Miniaturlüfters nach Fig. 2.

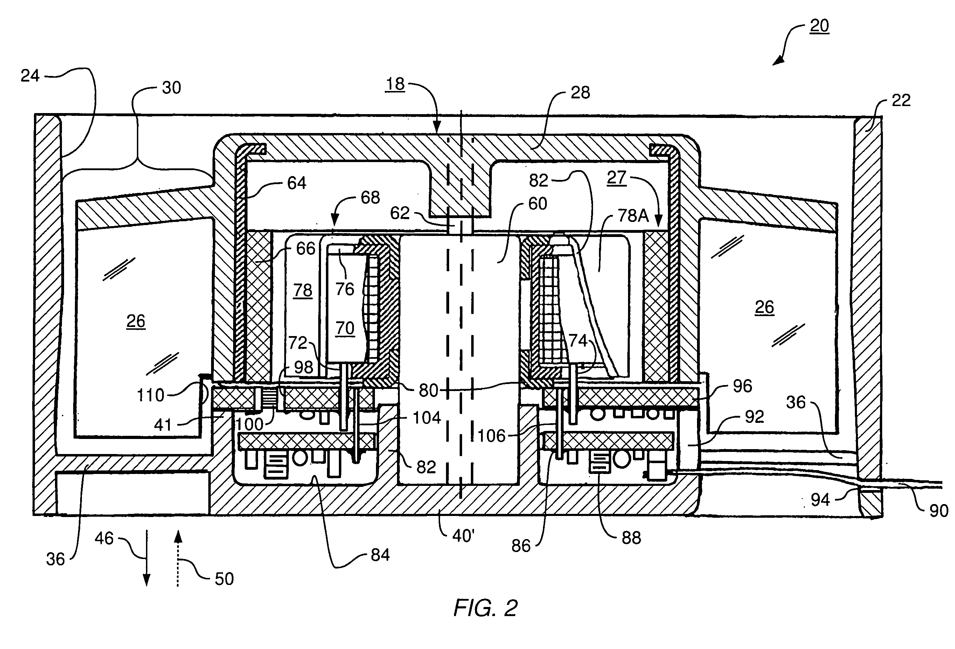

**Fig. 1** zeigt schematisch und stark vergrößert einen Miniaturlüfter 20. Dieser hat ein Lüftergehäuse 22 von prinzipiell bekannter Bauart, das teilweise geschnitten dargestellt ist. Es hat eine zylindrische Innenseite 24, innerhalb deren sich Lüfterflügel 26 drehen, die an einem Lüfterrad 28 angeordnet sind. Zwischen dem Lüfterrad 28 und der zylindrischen Innenseite 24 erstreckt sich ein Luftkanal 30. In den vier Ecken 32 des Lüftergehäuses 22, von denen nur drei dargestellt sind, erweitert sich bei diesem Beispiel die zylindrische Innenseite 24 in Form von konischen Abschnitten 34 nach außen. Jedoch ist darauf hinzuweisen, dass sich bei den Miniaturlüftern im Allgemeinen die zylindrische Innenseite 24 über die gesamte axiale Erstreckung T des Lüftergehäuses 22 erstreckt, d. h. dort entfallen aus Platzgründen meist die konischen Abschnitte 32, vgl. Fig. 2.

Über Stege bzw. Speichen 36 ist mit dem äußeren Lüftergehäuse 22 ein Trägerflansch 40 verbunden, an dem ein elektronisch kommutierter Motor (Fig. 2) befestigt ist, der zum Antrieb des Lüfterrads 28 dient und in Fig. 2 dargestellt ist.

Dreht sich das Lüfterrad 28 in Richtung eines Pfeiles 44, also entgegen dem Uhrzeigersinn, so fördert der Lüfter 20 Luft in Richtung von Pfeilen 46, also in Fig. 1 von links nach rechts, und dreht sich das Lüfterrad 28 im Uhrzeigersinn, also in Richtung eines Pfeiles 48, so fördert der Lüfter 20 Luft in Richtung von Pfeilen 50, also in Fig. 1 von rechts nach links.

Diese Umkehr der Drehrichtung auch bei Miniaturlüftern erfordert einen höheren Aufwand an elektronischen Bauteilen, was wegen der geringen Größe solcher Lüfter auf erhebliche Schwierigkeiten stößt.

**Fig. 2** zeigt eine Ausführungsform eines Miniaturlüfters 20 mit zwei Leiterplatten. Für gleiche oder gleich wirkende Teile werden die gleichen Bezugszahlen verwendet wie in Fig. 1. Der Lüfter 20 nach Fig. 2 hat in seinen Ecken keine Eckenerweiterungen 34, sondern seine Innenseite 24 ist im Wesentlichen durchgehend zylindrisch. Er wird durch einen elektronisch kommutierten Motor 18 angetrieben.

In dieser Innenseite ist über Stege 36 ein Trägerflansch 40' befestigt, der länger ist als der Flansch 40 der Fig. 1. In der Mitte des Flanschs 40' ist eine Lageranordnung 60 vorgesehen, die zur Lagerung der Drehachse 62 des auf der Außenseite des Rotors 27 angeordneten Lüfterrades 28 dient und nur ganz schematisch angedeutet ist (Für das Lager 60 und die Drehachse 62, sowie deren Befestigung am Rotor 27, gibt es im Stand der Technik vielfältige Lösungen. Die Darstellung in Fig. 2 ist deshalb nur sehr schematisch.)

Im Rotor 27 ist ein etwa topfförmiges magnetisches Rückschlussblech 64 angeordnet, gewöhnlich bei der Herstellung des Lüfterrades 28. Das Lüfterrad 28 wird, zusammen mit seinen Lüfterflügeln 26, gewöhnlich durch Spritzguss (molding) aus Kunststoff hergestellt. Auf der Innenseite des Rückschlussbleches (yoke) 64 ist im Rotor 27 eine Dauermagnetanordnung, hier in Form eines radial magnetisierten Permanentmagneten 66, befestigt. Alternativ könnten hier z. B. auch Einzelmagnete verwendet werden. Dieser Ring 66 kann z. B. zwei oder vier Magnetpole haben, die nicht dargestellt sind. Dieser Permanentmagnetring 66 steht in magnetischer Wechselwirkung mit einem Klauenpol-Innenstator 68, in dessen Innerem sich eine Wicklungsanordnung 70 befindet. Im einfachsten Fall enthält diese Wicklungsanordnung 70 eine Ringspule mit zwei elektrischen Anschlüssen 72, 74. Die Wicklungsanordnung 70 ist auf einem Spulenkörper 76 gewickelt. Dieser wird seinerseits festgehalten zwischen einem oberen Klauenpolblech 78 und einem unteren Klauenpolblech 80.

Wie Fig. 2 zeigt, können die einzelnen Klauenpole 78A auf einer Seite eine schräge Kante 82 haben, um im Zusammenwirken mit den Magnetpolen des Permanentmagnetrings 66 ein Reluktanzmoment geeigneter Form zu erzeugen, welches u. a. dazu dient, im stromlosen Zustand den Magnetring 66 in eine Stellung zu drehen, aus der ein problemloser Start möglich ist. Hierfür gibt es in der Literatur zahlreiche, ausführliche Beispiele.

Die Klauenpolbleche 78 und 80 sind auf dem Flansch 40' in geeigneter Form befestigt, z. B. auf der Lageranordnung 60, die ihrerseits in einem axialen Vorsprung 82 des Flanschs 40' befestigt sein kann.

Im Flansch 40' befindet sich eine ringförmige Ausnehmung 84, die so groß ausgebildet ist, dass in ihr wenigstens eine erste, ringförmige Leiterplatte 86 untergebracht werden kann, auf der elektronische Bauteile 88 angeordnet sind und von der eine elektrische Anschlussleitung 90 des Lüfters 20 durch eine Ausnehmung 92 des Lüfterflanschs 40' und durch eine Ausnehmung 94 des Lüftergehäuses 22 nach außen geführt ist. Die Leitung 90 dient zur Stromzufuhr zum und zur Steuerung des Lüfters 20.

Oberhalb der Leiterplatte 86 befindet sich - zwischen dem oberen Rand 41 des Lüfterflanschs 40' und dem unteren Ende des Lüfterrads 28 - eine zweite Leiterplatte 96, die eine Ausnehmung 98 hat, in der ein galvanomagnetischer Rotorstellungssensor 100 angeordnet ist, und zwar unterhalb der Rotormagnetanordnung 66, so dass dieser Sensor 100 im Bereich des Streufelds der Rotormagnetanordnung 66 liegt und durch dieses Streufeld gesteuert wird. Im Normalfall ist der Sensor 100 ein Hall-IC, doch gibt es hierfür auch andere Möglichkeiten, z. B. GMRs.

In der zweiten Leiterplatte 96 sind Anschlussstifte festgelötet, die dazu dienen, die Anschlüsse 72, 74 der Ringspule 70 mit den Bauelementen auf der zweiten Leiterplatte 96 elektrisch zu verbinden. Ebenso erstrecken sich zwischen der ersten Leiterplatte 86 und der zweiten Leiterplatte 96 Verbindungsstifte 104, 106 zur elektrischen Verbindung zwischen diesen Leiterplatten. Alternativ kann dort auch eine elektrische Steckverbindung (nicht dargestellt) vorgesehen werden, oder z. B. eine Draht-, Litzen- oder Folienverbindung.

Die Verwendung von zwei Leiterplatten 86, 96 gibt die Möglichkeit, direkt im Lüfter, auch wenn dieser sehr klein ist, eine Regel- oder Ansteuerelektronik vorzusehen, da der Raum für elektronische Bauelemente entsprechend vergrößert ist. Durch die erhöhte axiale Erstreckung T (Fig. 1) des Lüfters 20 können die Lüfterflügel 26 entsprechend länger ausgebildet werden, wobei sie im Bereich des Lüfterflanschs 40' einen kleinen Abstand 110 von diesem halten müssen. Man erhält hierdurch ein erhöhtes Luft-Fördervolumen und einen höheren Luftdruckaufbau.

Naturgemäß können auch mehr als zwei Leiterplatten verwendet werden, wobei sich dann die axiale Länge T des Lüfters 20 entsprechend vergrößert.

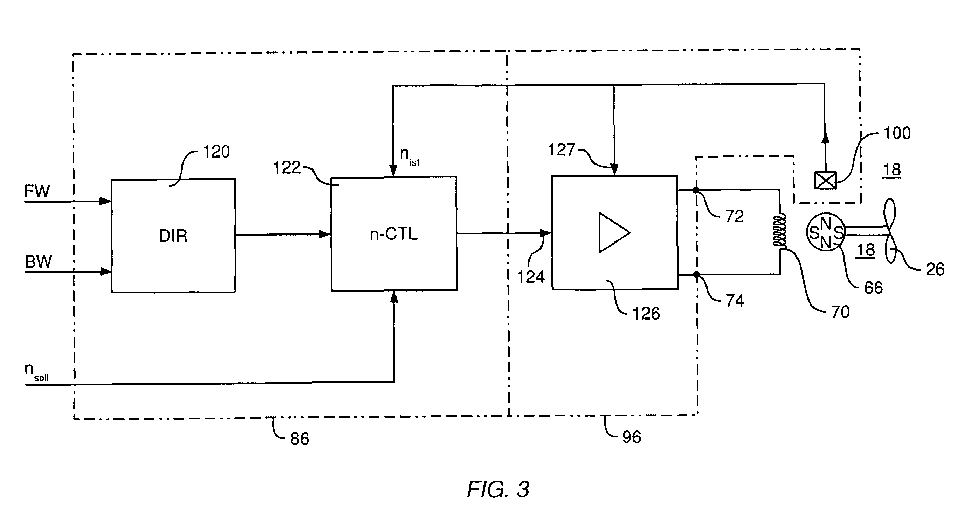

**Fig. 3** zeigt eine bevorzugte Schaltung des Lüfters 20 der Fig. 2. Dieser hat eine Richtungssteuerung 120, bei der eingegeben werden kann, ob der Lüfter 20 vorwärts (FW) oder rückwärts (BW) laufen soll.

Das Ausgangssignal der Richtungssteuerung 120 wird einem Drehzahlregler n_CTL 122 zugeführt, dem zusätzlich die gewünschte Drehzahl n_soll und die tatsächliche Drehzahl n_ist des Lüfters 20 zugeführt werden. Dieser Regler 122, der z. B. ein P-Regler, PI-Regler oder ein PID-Regler sein kann, erzeugt an seinem Ausgang 124 einen Stellwert, der einer Leistungsstufe 126 zugeführt wird, an deren Ausgänge 72, 74 die Wicklungsanordnung 70 des Innenstators 68 angeschlossen ist.

Der Rotor 66 treibt das Lüfterrad 28, an dem die Lüfterflügel 26 angebracht sind, an und erzeugt über den Hall-IC 100 das Signal n_ist, dass auch zur Steuerung der Kommutierung einem Eingang 127 der Endstufe 126 zugeführt wird.

Sehr vorteilhaft ist, dass der Innenstator 68 mit den Leiterplatten 86 und 96 zu einer Baueinheit zusammengebaut werden kann, die, nach ihrer elektrischen Montage, mit dem Lüfterflansch 40' vereint werden kann.

Anschließend wird das Lüfterrad 28 mit seiner Achse 62 in der Lageranordnung 60 gelagert, wodurch automatisch die Wirkverbindung zwischen dem Magneten 46 und dem Hall-IC 100 hergestellt wird, so dass hierfür keine besonderen Montageschritte notwendig sind.

Wie Fig. 3 zeigt, können die Bauelemente mit Vorteil so verteilt werden, dass auf der motornahen Leiterplatte 96 überwiegend die Bauelemente 72, 74, 100, 127 angeordnet sind, die direkt dem Motor 18 zugeordnet sind, und dass auf der unteren Leiterplatte 86 die Bauelemente 88, 120, 122 angeordnet sind, die zu einer übergeordneten Steuerung gehören, z.B. der Steuerung 120 für die Drehrichtung, oder dem Drehzahlregler 122.

Dies ermöglicht einen modularen Aufbau, d.h. die obere Leiterplatte 96 kann an die Leistung,Betriebsspannung etc. des Motors 18 angepasst werden, und die untere Leiterplatte 86 ermöglicht die Realisierung unterschiedlicher Funktionen, z.B. einer Drehzahlregelung 122 oder einer Drehrichtungssteuerung 120.

Naturgemäß sind im Rahmen der vorliegenden Erfindung vielfache weitere Abwandlungen und Modifikationen möglich.

## Patentansprüche

1. Miniaturlüfter, insbesondere Axiallüfter, mit einem elektronisch kommutierten Antriebsmotor (18), welcher einen mit einer Statorwicklungsanordnung versehenen Innenstator (68) und einen mit einer Welle (62) verbundenen Außenrotor (27) aufweist, an welch letzterem eine Dauermagnetanordnung (66) vorgesehen ist, die mit dem Innenstator (68) in Wechselwirkung steht,
auf welchem Außenrotor (27) ein Lüfterrad (28) angeordnet ist, das mit Lüfterflügeln (26) versehen ist,
ferner mit einem Flansch (40'), welcher ein Lagerrohr (60) trägt, in welchem die Welle (62) des Außenrotors (27) drehbar gelagert ist,
welcher Flansch (40') einen Hohlraum (84) aufweist, der zur Aufnahme mindestens einer mit Elektronikbauteilen versehenen ersten Leiterplatte (86) dient, wobei im Grenzbereich zwischen Flansch (40') und elektronisch kommutiertem Motor (18) eine zweite Leiterplatte (96) vorgesehen ist, die mindestens einen galvanomagnetischen Sensor (100) trägt, welcher dazu ausgebildet ist, das von der Dauermagnetanordnung (66) des Außenrotors (27) auf eine zugeordnete Stelle des Stators (68) einwirkende Magnetfeld zu erfassen, wobei die axiale Erstreckung der Lüfterflügel (26) so bemessen ist, dass sich mindestens ein Teil der Lüfterflügel vom Lüfterrad (28) bis zum Außenbereich des Flanschs (40') erstreckt, um den Luftvolumenstrom (V/t) und den Luftdruckaufbau (Δp) des Lüfters (20) zu verbessern.

2. Miniaturlüfter mit einem Lüftergehäuse (22), dessen Außenmaße im Bereich von etwa 20 x 20 mm bis etwa 60 x 60 mm liegen.

3. Miniaturlüfter nach Anspruch 1 oder 2, bei welchem die Leiterplatten (86, 96) über Verbindungsstifte (104, 106) miteinander elektrisch verbunden sind.

4. Miniaturlüfter nach einem der Ansprüche 1 bis 3, bei welchem die Leiterplatten (86, 96) durch eine Steckverbindung mit einander verbunden sind.

5. Miniaturlüfter nach einem der Ansprüche 1 bis 4, bei welchem die Leiterplatten (86, 96) durch eine flexible Litzenverbindung elektrisch miteinander verbunden sind.

6. Miniaturlüfter nach einem der Ansprüche 1 bis 5, bei welchem die Leiterplatten (86, 96) über einen gebogenen flexiblen Abschnitt miteinander elektrisch verbunden sind.

7. Miniaturlüfter nach einem der vorhergehenden Ansprüche, bei welchem der elektronisch kommutierte Motor als Klauenpol-Außenläufermotor ausgebildet ist.

8. Miniaturlüfter nach einem der vorhergehenden Ansprüche, bei welchem die Drehrichtung (DIR) elektrisch steuerbar ist.

9. Miniaturlüfter nach einem der vorhergehenden Ansprüche, bei welchem die Elektronikbauteile der ersten Leiterplatte (86) zumindest überwiegend Steuer- und /oder Regelaufgaben für den Elektromotor (18) zugeordnet sind,
und die zweite Leiterplatte (96) zumindest überwiegend Bauelemente (100, 126) trägt, welche der Kommutierung des elektronisch kommutierten Motors (18) dienen,
wobei zwischen erster Leiterplatte (86) und zweiter Leiterplatte (96) elektrische Verbindungen (104, 106) vorgesehen sind.
